# EUROPÄISCHE PATENTSCHRIFT

(11) **EP 0 401 943 B1**
(45) Veröffentlichungstag und Bekanntmachung des Hinweises auf die Patenterteilung: **02.03.1994**
(21) Anmeldenummer: 90250115.4
(22) Anmeldetag: 04.05.1990
(51) Int. Cl.: G03B 17/02, G03B 17/10

(54) **Wärmedehnungs-Ausgleichspendel**
Heat dilatation compensation device
Dispositif de compensation de la dilatation thermique

(30) Priorität: 08.06.1989 DE 3918698
(43) Veröffentlichungstag der Anmeldung: 12.12.1990
(73) Patentinhaber: ARRI CINE & VIDEO GERÄTE GESELLSCHAFT M.B.H., A-1150 Wien (AT); ARNOLD & RICHTER CINE TECHNIK GMBH & CO. BETRIEBS KG., D-80799 München (DE)
(72) Erfinder: Alscher, Edbert, A-2345 Brunn/Geb. (AT)
(74) Vertreter: Ninnemann, Detlef, Dipl.-Ing.

(56) Entgegenhaltungen:
- DE-A- 2 936 454
- DE-A- 3 538 827
- SU-A- 651 290
- M. NELKON et al.: "Advanced level physics", Auflage 3, Kapitel 11: "Thermal expansion", 1970, Seiten 269-291, Heinemann Educational Books Ltd, London, GB

## Beschreibung

Die Erfindung betrifft eine Vorrichtung zum Verbinden von zwei Bauteilen einer Laufbildkamera, insbesondere zum Verbinden eines Objektivträgers mit dem Kamerakörper bzw. einer Filmführung mit der Filmtransporteinrichtung.

Bei optischen Geräten allgemein und bei Laufbildkameras im besonderen ist äußerste Maßhaltigkeit der einzelnen Bauteile des optischen Geräts von größter Bedeutung. Eine exakte Maßhaltigkeit sorgt bei Laufbildkameras für eine genaue Abbildung des aufzunehmenden Objekts auf die Bildebene sowie für eine exakte Filmführung, wodurch seitliche Ausweichbewegungen des Films sowie Ausweichbewegungen senkrecht zur Filmfläche und damit unscharfe Bilder sowie unnötige Geräuschentwicklungen vermieden werden.

Aus der DE-A 35 38 827 ist eine Filmaufnahmekamera mit einem Gehäuse bekannt, in dem ein Kamerawerk eingeschlossen ist, das den Film über eine Filmführung an einem Bildfenster absatzweise vorbeibewegt und das durch ein Objektiv ins Bildfenster geworfene Licht abwechselnd unterbricht und freigibt. Zur Reduzierung der Geräuscherzeugung ist zwischen dem Kamerawerk und einem Objektivaufnahmeteil eine körperschallabsorbierende, jedoch maßhaltige Verbindung zwischengeschaltet und zwischen dem Objektivaufnahmeteil und dem Gehäuse ein körperschallisolierender Gehäuseabschluß eingefügt.

Durch spezielle Ausgestaltung des Gehäuseabschlusses in der Weise, daß er das Objektivaufnahmeteil und damit auch die an dieses angeschlossene Teile, nämlich das Objektiv und das Kamerawerk aus eigener Kraft am Gehäuse trägt, wird ein minimaler Geräuschpegel erzielt, ohne daß die geforderte exakte Lagezuordnung zwischen Objektiv und Filmebene beeinträchtigt wird.

Bei den Maßnahmen zur Minimierung bei der Übertragung des Körperschalls von der Innenkamera auf das Objektiv werden notwendigerweise jedoch Materialien unterschiedlichster Art verwendet, was die Gefahr einschließt, daß bei einem Einsatz der Laufbildkamera in extremen Temperaturbereichen von bsp. +50 °C bis -20 °C das Auflagemaß, d.h. die Distanz zwischen dem Objektivträger und der Filmebene sich verändert, so daß die Gefahr der Aufnahme unscharfer Bilder besteht.

Zur Geräuschvermeidung ist bei Laufbildkameras höchste Präzision bei der Fertigung und Montage der Filmführungselemente erforderlich, bspw. bezüglich der Oberfläche und Lage der Greiferspitzen in Bezug auf die Filmführung. Da zwischen der Filmführung und den Greiferspitzen ein Spalt besteht, in dem der Laufbildfilm bewegt wird, ist es ebenfalls erforderlich, daß dieser Spalt zur exakten Einhaltung der Bildebene und einer optimalen Zuordnung zwischen der Filmperforation und den Greiferspitzen absolut konstant ist, was ebenfalls beim Einsatz der Laufbildkamera bei extremen Temperaturunterschieden zu Problemen führt.

Aufgabe der vorliegenden Erfindung ist es daher, eine Vorrichtung zur Verbindung zweier Bauteile einer Laufbildkamera zu schaffen, die eine hohe Maßhaltigkeit der Verbindung auch bei extremen Temperaturunterschieden gewährleistet.

Diese Aufgabe wir durch das kennzeichnende Merkmal des Anspruchs 1 gelöst.

Die erfindungsgemäße Lösung stellt sicher, daß verschiedene Bauteile einer Laufbildkamera auch bei extremen Temperaturunterschieden eine hohe Maßhaltigkeit ihrer Verbindung aufweisen, wobei extreme Unterschiede der Wärmeausdehnungskoeffizienten der verschiedenen Bauteilmaterialien ausgeglichen werden können. Dadurch wird gewährleistet, daß schallabsorbierende Materialien zur Geräuschvermeidung oder Geräuschreduzierung eingesetzt werden können und gleichzeitig ein konstantes Verbindungsmaß der verschiedenen Bauteile sichergestellt ist.

Eine vorteilhafte Weiterbildung der erfindungsgemäßen Lösung ist dadurch gekennzeichnet, daß das erste Element aus einem mit dem einen Bauteil kraft- und/oder formschlüssig verbundenen Befestigungsstift, das zweite Element aus einer mit dem zweiten Bauteil kraft- und/oder formschlüssig verbundenen Befestigungshülse und das Zwischenelement aus einer radial mit dem Befestigungsstift und der Befestigungshülse verbundenen Zwischenhülse besteht, wobei zwischen den Stirnflächen der Zwischenhülse und den miteinander zu verbindenden Bauteilen ein axialer Spalt vorgesehen ist.

Diese Ausgestaltung des Wärmedehnungs-Ausgleichspendels gewährleistet eine minimale Baugröße bei maximalen Ausgleichseigenschaften, so daß sich die Form des Wärmedehnungs-Ausgleichspendels insbesondere zum Einsatz in feinmechanischen Geräten wie einer Laufbildkamera eignet, ohne daß ein größerer Platzbedarf besteht.

Eine weitere vorteilhafte Weiterbildung der erfindungsgemäßen Lösung ist dadurch gekennzeichnet, daß ein radialer Spalt zwischen der Innenfläche der Befestigungshülse und der Außenfläche der Zwischenhülse über einen weiten Bereich der beiden Berührungsflächen vorgesehen ist. Zusätzlich kann die Zwischenhülse an ihrer einen Stirnseite eine radial über die Außenfläche der Zwischenhülse ragende Schulter aufweisen, deren der Stirnseite der Zwischenhülse abgewandte Fläche an der einen Stirnseite der Befestigungshülse anliegt, und daß ein geringer Teil der Außenfläche der Zwischenhülse mit einem entsprechenden Teil der Innenfläche der Befestigungshülse kraft- und/oder formschlüssig verbunden ist.

Eine weitere vorteilhafte Weiterbildung der erfindungsgemäßen Lösung ist dadurch gekennzeichnet, daß die miteinander zu verbindenden Bauteile der Laufbildkamera mit Verlängerungselementen verbunden sind, zwischen deren an einer freien Stelle in der Laufbildkamera angeordneten Enden ein Wärmedehnungs-Ausgleichspendel angeordnet ist.

Diese Weiterbildung der erfindungsgemäßen Lösung ermöglicht es, auch solche Bauteile einer Laufbildkamera miteinander maßhattig über ein Wärmedehnungs-Ausgleichspendel miteinander zu verbinden, deren Anordnung und/oder Lage den Einsatz eines solchen Wärmedehnungs-Ausgleichspendels normalerweise verbietet. Erfolgt die Verbindung dieser Bauteile jedoch über Verlängerungselemente an einer Stelle, wo ausreichend Platz zur Anordnung eines Wärmedehnungs-Ausgleichspendels besteht, so kann die exakte Zuordnung dieser Bauteile auch bei extremen Temperaturunterschieden beim Einsatz der Laufbildkamera gewährleistet werden.

Zur Gewährleistung eines konstanten Auflagemaßes in einem extremen Temerpaturbereich von bspw. +50° C bis -20° C werden zum Verbinden des Objektivträgers einer Laufbildkamera mit dem Kamerakörper in einer weiteren Ausgestaltung der zwei Wärmedehnungs-Ausgleichspendel symmetrisch zur Mittelängsachse des Kamerakörpers zu beiden Seiten der Objektivbohrung im Objektivträger angeordnet.

Eine weitere vorteilhaften Weiterbildung der erfindungsgemäßen Lösung besteht darin, daß der Befestigungsstift und die Befestigungshülse aus PERNIFER mit einem Wärmeausdehnungskoeffizienten von 1,2 x 10-6 mm/°C und die Zwischenhülse aus einer Aluminium-Zink-Magnesium-Kupfer-Legierung mit einem Wärmeausdehnungskoeffizienten von 23 x 10-6 mm/°C bestehen.

Weitere vorteilhafte Ausgestaltungen und Weiterbildungen der Erfindung sind in den Unteransprüchen 3 und 6 gekennzeichnet.

Die Erfindung wird nachstehend an Hand der in der Zeichnung dargestellten Ausführungsbeispiele näher erläutert. Es zeigen:
- Figur 1: einen schematischen Längsschnitt durch den vorderen Teil einer Laufbildkamera;
- Figur 2: eine Vorderansicht des Objektivträgers der Laufbildkamera;
- Figur 3: einen Längsschnitt durch den Kamerakörper im Bereich des Objektivträgers;
- Figur 4: eine detaillierte Darstellung des Wärmedehnungs-Ausgleichspendels und
- Figur 5: eine vergrößerte Darstellung des Bereichs X des Wärmedehnungs-Ausgleichspendels gemäß Figur 4.

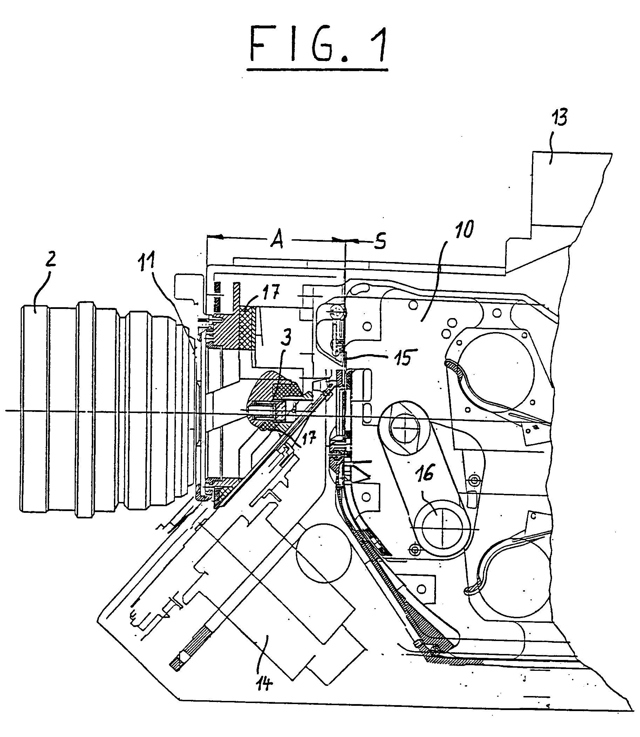

Der in Figur 1 dargestellte Längsschnitt durch den vorderen Teil einer Laufbildkamera 1 zeigt ein in einem Gehäuse 13 der Laufbildkamera 1 angeordnetes Profilstück 17 aus einem kunststoff- oder gummiartigen Material, das zur Geräuschreduzierung bei der Verbindung Objektiv-Innenkamera vorgesehen ist und die Übertragung des Körperschalls von der Innenkamera auf das Objektiv durch entsprechende Geräuschisolationsmaßnahmen auf ein Minimum reduziert.

Das Profilstück 17 ist mittels Schrauben befestigt, die eine an das Profilstück anvulkanisierte oder angeklebte Metallplatte gegen eine Vorderfläche des Gehäuses 13 der Laufbildkamera 1 ziehen. Auf der der Metallplatte gegenüberliegenden Seite des Profilstücks 17 ist ebenfalls eine Metallplatte anvulkanisiert oder angeklebt, die wiederum mit dem Objektivträger 11 verbunden ist. Im Objektivträger 11 ist in bekannter Weise ein auswechselbares Objektiv 2 aufgenommen.

Die Filmführungsebene 15 wird durch einen Filmspalt S gebildet, in dem der Laufbildfilm geführt ist und intermittierend mittels in die Filmperforation eingreifender Greiferspitzen durch ein Filmschaltwerk 16 transportiert wird. Über Vor- und -nachwickelrollen wird der Film zur Filmkassette transportiert, die an das Gehäuse 13 der Laufbildkamera 1 ansetzbar ist.

Eine rotierende Spiegelblende 14 dient zur Belichtung des Films bzw. zur Abdeckung des Films während der Filmtransportphase.

Da das Filmschaltwerk 16 auch bei sorgfältiger Auslegung und höchster Präzision bei der Fertigung und Montage der Filmführungselemente zur Geräuschvermeidung ein Erzeuger von Geräuschen bleibt, deren Abstrahlung an die Umgebung soweit wie möglich verhindert werden muß, damit Störungen von Tonaufnahmen unterbleiben, ist das Profilstück 17 vorgesehen, das eine Übertragung des Körperschalls vom Bereich der Innenkamera 10 zum Objektivträger 11 und damit zum Objektiv 2 auf ein Minimum reduziert.

Dabei ist es jedoch erforderlich, daß das Auflagemaß A zwischen dem Objektivträger 11 und der Filmführungsebene 15 konstant bleibt, wozu zu einem Teil die spezielle Ausgestaltung des Profilstücks 17 und dessen Anordnung beiträgt.

Aufgrund der Verbindung unterschiedlichster Materialien mit stark voneinander abweichenden Wärmeausdehnungskoeffizienten wie beispielsweise Gummi und Aluminium oder Edelstahl, treten jedoch Probleme hinsichtlich der Maßhaltigkeit des Auflagemaßes A beim Einsatz der Laufbildkamera 1 über einen großen Temperaturbereich von bspw. -20° C bis +50° C auf.

Zur Kompensation der unterschiedlichen Längenänderungen der einzelnen Bauteile der Laufbildkamera aufgrund von Temperaturdifferenzen wird erfindungsgemäß in der in Figur 1 dargestellten Laufbildkamera 1 ein Wärmedehnungs-Ausgleichspendel 3, ein sog. Rost'sches Pendel, in die Verbindung zwischen Objektivträger 11 und Innenkamera bzw. Kamerakörper 10 eingesetzt.

Die Anordnung des Wärmedehnungs-Ausgleichspendels 3 ist in Figur 1 nur schematisch dargestellt.

In gleicher Weise kann ein Wärmedehnungs-Ausgleichspendel zur Verbindung des Filmschaltwerks 16 mit der Filmführungsebene 15 eingesetzt werden, so daß der Filmspalt S im Temperatureinsatzbereich der Laufbildkamera 1 bei jeder Temperatur zwischen -20° C und +50° C konstant bleibt, so daß Ausweichbewegungen des Films aus der Filmebene vermieden werden und ein exakter Eingriff der Greiferspitzen in die Filmperforation zur Vermeidung unnötiger Geräuschentwicklungen sichergestellt wird.

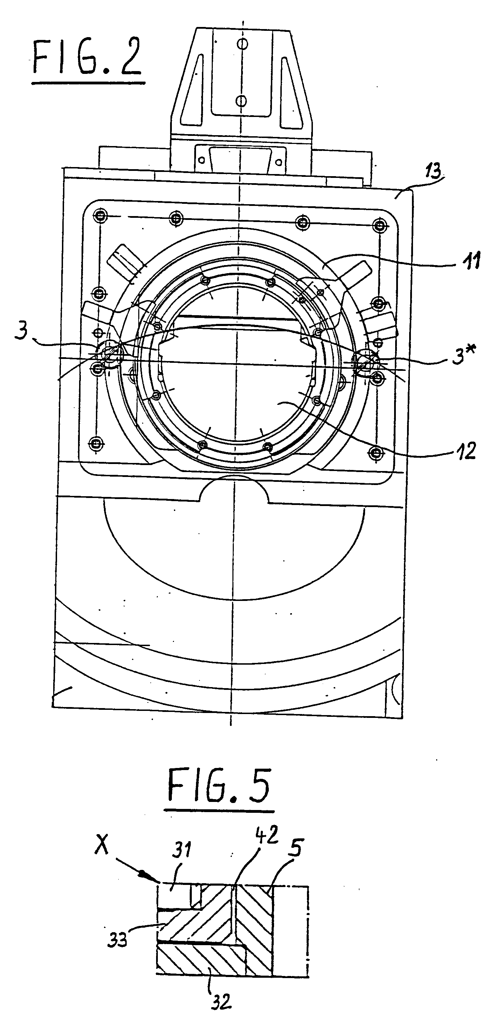

Figur 2 zeigt eine Vorderansicht der Laufbildkamera 1 mit dem Objektivträger 11 und der Objektivbohrung 12.

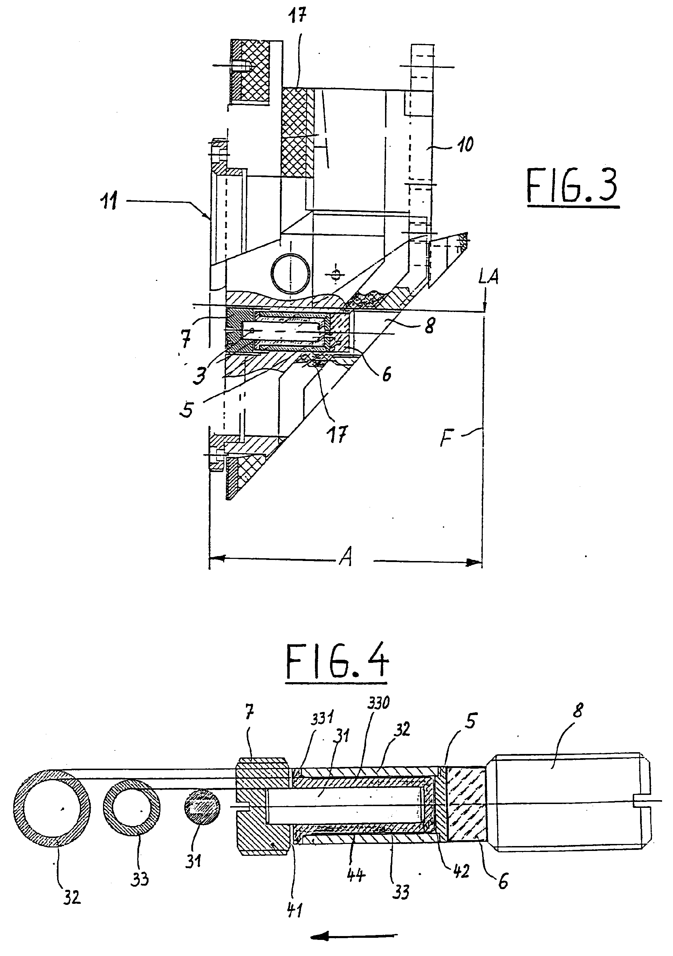

Zwei Wärmedehnungs-Ausgleichspendel 3, 3* sind im Bereich der Objektivachse rechts und links von der Objektivbohrung 12 in den Objektivträger 11 eingebaut. Der genauere Aufbau der Wärmedehnungs-Ausgleichspendel 3, 3* wird nachstehend anhand der Figuren 3 bis 5 näher erläutert.

Figur 3 zeigt einen Längsschnitt durch den Kamerakörper 10 im Bereich des Objektivträgers 11. Dieser Längsschnitt zeigt die Verbindung des Objektivträgers 11 mit dem Kamerakörper 10 über ein oder wahlweise mehrere Profilstücke 17 aus einem gummiartigen Material zur Minimierung der Übertragung des Körperschalls von dem mit dem Kamerakörper 10 verbundenen Filmschaltwerk zur mit dem Objektivträger 11 zu verbindenden Linse 2, deren Achse mit LA bezeichnet ist.

Zur Einhaltung eines konstanten Auflagemaßes A zwischen der Ebene des Objektivträgers 11 und der Filmebene F ist ein Wärmedehnungs-Ausgleichspendel 3 vorgesehen, das zum einen über einen ersten Stopfen 7 mit dem Objektivträger 11 und zum anderen über eine Verbindungsplatte 5, eine Plexiglasplatte 6 und einen Gewindestopfen 8 mit dem Kamerakörper 10 verbunden ist.

Dabei ist das mit dem Kamerakörper 10 verbundene Ende des Wärmedehnungs-Ausgleichspendels 3 in ein Profilstück 17 zur Minimierung der Geräuschübertragung eingesetzt, so daß durch das Wärmedehnungs-Ausgleichspendel 3 keine oder eine nur minimale Schallbrücke entsteht. Der detaillierte Aufbau des Wärmedehnungs-Ausgleichspendels 3 soll nachstehend anhand der Figuren 4 und 5 näher erläutert werden.

Figur 4 zeigt eine detaillierte Darstellung des Wärmedehnungs-Ausgleichspendels im Längsschnitt sowie schematisch im Querschnitt und die Verbindung des Wärmedehnungs-Ausgleichspendels 3 mit einem mit dem Objektivträger 11 verbundenen Stopfen 7 einerseits und mit einer Befestigungsplatte 5, einem Plexiglas-Verbindungselement 6 und einem Gewindestopfen 8 andererseits, die mit dem Kamerakörper 10 gemäß Figur 3 verbunden sind.

Das Wärmedehnungs-Ausgleichspendel besteht aus einem Befestigungsstift 31, der in diesem Ausführungsbeispiel kraftschlüssig mit dem Stopfen 7 verbunden ist, wobei die Stirnfläche des Befestigungsstiftes 31 fest am Boden des Stopfens 7 anliegt.

Die mit dem anderen Bauteil, nämlich dem Kameragehäuse 10 über die Befestigungsplatte 5 verbundene Befestigungshülse 32 ist mit dem Befestigungsstift 31 über eine Zwischenhülse 33 verbunden. Die Zwischenhülse 33 ist im Längsschnitt U-förmig mit einer an der einen Stirnseite ausgebildeten radialen Schulter 331 geformt, wobei der Außendurchmesser des U-förmigen Teils 330 der Zwischenhülse 33 gegenüber einem weiten Teil des Innendurchmessers der Befestigungshülse 32 so bemessen ist, daß ein radialer Spalt 44 ausgebildet ist. Lediglich im Bereich der Schulter 331 ist eine kraftschlüssige Verbindung zwischen der Außenfläche der Zwischenhülse 33 und der Innenfläche der Befestigungshülse 33 gegeben.

Darüber hinaus ist die Zwischenhülse 33 axial von dem Stopfen 7 einerseits und der Befestigungsplatte 5 andererseits so beabstandet, daß jeweils ein kleiner axialer Spalt 41, 42 ausgebildet wird.

Die dem Stopfen 7 entgegengesetzte Stirnfläche des Befestigungsstiftes 31 liegt ebenfalls fest am Boden des U-förmigen Körpers 330 der Zwischenhülse 33 an und bildet mit diesem eine feste Kontaktfläche aus.

Das Material des Befestigungsstiftes 31 sowie der Befestigungshülse 32 besteht aus PERNIFER 36 mit einem Wärmeausdehnungskoeffizienten von 1,2 x 10⁻⁶ mm/°C, während das Material der Zwischenhülse 33 aus einer Aluminium-Zink-Magnesium-Kupfer-Legierung (AlZnMgCu 1,5 F52) mit einem Wäremausdehnungskoeffizienten von 23 x 10⁻⁶ mm/°C besteht.

Infolge der unterschiedlichen Materialeigenschaften der Befestigungshülse sowie des Befestigungsstiftes einerseits und der Zwischenhülse 33 andererseits wird sichergestellt, daß unterschiedliche Wärmeausdehnungen der einzelnen Bauteile der Laufbildkamera sowie der Befestigungselemente kompensiert werden.

Dabei erfolgt bei Erhöhung der Umgebungstemperatur eine geringfügige Ausdehnung der Befestigungshülse 32 in Richtung des in Figur 4 eingetragenen Pfeiles, während eine erhebliche Wärmeausdehnung der Zwischenhülse 33 aufgrund des wesentlich größeren Wärmeausdehnungskoeffizienten entgegen der Pfeilrichtung stattfindet. Bei dieser wesentlich größeren Wärmeausdehnung zieht aufgrund der kraftschlüssigen Verbindung zwischen Zwischenhülse 33 und Befestigungsstift 31 die Zwischenhülse 33 den Befestigungsstift 31 in Richtung entgegen der Pfeilrichtung und kompensiert dabei die geringfügige Ausdehnung des Befestigungsstiftes 31 sowie der Befestigungshülse 32 in Richtung des in Figur 4 eingetragenen Pfeiles.

Figur 5 verdeutlicht in einer Vergrößerung des Abschnittes X gemäß Figur 4 die Verbindung der einzelnen Elemente 31, 32, 33 des Wärmedehnungs-Ausgleichspendels 3 zur Bildung eines axialen Spalts 42, der für den Wärmedehnungsausgleich erforderlich ist.

Die in den Figuren 4 und 5 dargestellte kraftschlüssige Verbindung der einzelnen Elemente 31, 32, 33 des Wärmedehnungs-Ausgleichspendels 3 sowie deren Verbindung mit den Befestigungsteilen 5, 7 der Bauteile 10, 11 der Laufbildkamera kann auch durch eine formschlüssige Verbindung sowie eine kombinierte formschlüssige und kraftschlüssige Verbindung ersetzt werden.

## Patentansprüche

1. Vorrichtung zum Verbinden von zwei Bauteilen einer Laufbildkameran, nämlich zum Verbinden von einem Objektivträger mit dem Kamerakörper oder von einer Filmführung mit der Filmtransporteinrichtung,
**dadurch gekennzeichnet**,
daß die Vorrichtung nach Art der Kompensationsvorrichtung eines Rost'schen Pendels (3) aufgebaut ist, das aus einem mit dem einen Bauteil (11) verbundenen ersten Element (31), einem mit dem anderen Bauteil (10) verbundenen zweiten Element (32) und mindestens einem zwischen dem ersten und zweiten Element (31, 32) angeordneten und mit diesen verbundenen Zwischenelement (33) besteht,
und daß der Wärmeausdehnungskoeffizient des Zwischenelements (33) ein Vielfaches des Wärmeausdehnungskoeffizenten des ersten und zweiten Elementes (31, 32) beträgt.

2. Vorrichtung nach Anspruch 1, **dadurch gekennzeichnet**, daß das erste Element aus einem mit dem einen Bauteil (11) kraft- und/oder formschlüssig verbundenen Befestigungsstift (31), das zweite Element aus einer mit dem zweiten Bauteil (10) kraft- und/oder formschlüssig verbundenen Befestigungshülse (32) und das Zwischenelement aus einer radial mit dem Befestigungsstift (31) und der Befestigungshülse (32) verbundenen Zwischenhülse (33) besteht, wobei zwischen den Stirnflächen der Zwischenhülse (33) und den miteinander zu verbindenden Bauteilen (10, 11) ein axialer Spalt (41, 42) vorgesehen ist.

3. Vorrichtung nach Anspruch 2, **dadurch gekennzeichnet,** daß der Befestigungsstift (31), die Befestigungshülse (32) und die Zwischenhülse (33) zylinderförmig ausgebildet sind.

4. Vorrichtung nach Anspruch 2 oder 3, **dadurch** **gekennzeichnet,** daß ein radialer Spalt (44) zwischen der Innenfläche der Befestigungshülse (32) und der Außenfläche der Zwischenhülse (33) über einen weiten Bereich der beiden Berührungsflächen vorgesehen ist

5. Vorrichtung nach einem der Ansprüche 2 bis 4, **dadurch gekennzeichnet,** daß die Zwischenhülse (33) an ihrer einen Stirnseite eine radial über die Außenfläche der Zwischenhülse ragende Schulter (331) aufweist, deren der Stirnseite der Zwischenhülse (33) abgewandte Fläche an der einen Stirnseite der Befestigungshülse (32) anliegt und daß ein geringer Teil der Außenfläche (330) der Zwischenhülse (33) mit einem entsprechenden Teil der Innenfläche der Befestigungshülse (32) kraft- und/oder formschlüssig verbunden ist.

6. Vorrichtung nach einem der Ansprüche 2-5, **dadurch gekennzeichnet,** daß die Befestigungshülse (2) über eine Platte (5) und ein vorzugsweise aus Plexiglas bestehendes Verbindungselement (6) mit einem Zylinderstopfen (8) verbunden ist.

7. Vorrichtung nach Anspruch 1, **dadurch gekennzeichnet,** daß die miteinander zu verbindenden Bauteile (10, 11) der Laufbildkamera (1) mit Verlängerungselementen verbunden sind, zwischen deren an einer freien Stelle in der Laufbildkamera (1) angeordneten Enden ein Wärmedehnungs-Ausgleichspendel (3) angeordnet ist.

8. Vorrichtung nach einem der vorangehenden Ansprüche zum Verbinden eines Objektivträgers mit dem Kamerakörper einer Laufbildkamera,
**dadurch gekennzeichnet,**
daß zwei Wärmedehnungs-Ausgleichspendel (3, 3*) symmetrisch zur Mittelängsachse des Kamerakörpers (10) zu beiden Seiten der Objektivbohrung (12) im Objektivträger (11) angeordnet sind.

9. Vorrichtung nach einem der Ansprüche 2-8, **dadurch gekennzeichnet,** daß der Befestigungsstift (31) und die Befestigungshülse (32) aus PERNIFER (36) mit einem Wärmeausdehnungskoeffizienten von 1,2 x 10⁻⁶ mm/°C und die Zwischenhülse (33) aus einer Aluminium-Zink-Magnesium-Kupfer-Legierung mit einem Wärmeausdehnungskoeffizienten von 23 x 10⁻⁶ mm/°C bestehen.

## Claims

1. Device for connecting two component parts of a motion picture camera, namely for connecting a lens carrier with the camera body or a film guide with the film transport mechanism,
characterised in that the device is installed in the manner of the compensation device of a Rost pendulum (3) which consists of a first element (31) connected to one component (11), a second element (32) connected to the other component (10) and at least an intermediate element (33) set between the first and second element (31, 32) and connected to same, and that the heat expansion coefficient of the intermediate element (33) amounts to a multiple of the heat expansion coefficient of the first and second element (31, 32).

2. Device according to claim 1 characterised in that the first element consists of a fastening pin (31) connected in force-locking and/or keyed engagement with the one component (11), the second element consists of a fastening sleeve (32) connected in force -locking and/or keyed engagement with the second component (10), and the intermediate element consists of an intermediate sleeve (33) connected radially to the fastening pin (31) and the fastening sleeve (32) wherein between the end faces of the intermediate sleeve (33) and the components (10,11) which are to be connected there is an axial gap (41,42).

3. Device according to claim 2 characterised in that the fastening pin (31), the fastening sleeve (32) and the intermediate sleeve (33) are cylindrical in shape.

4. Device according to claim 2 or 3 characterised in that a radial gap (44) is provided between the inner face of the fastening sleeve (32) and the outer face of the intermediate sleeve (33) over a wide area of the two contact faces.

5. Device according to one of claims 2 to 4 characterised in that the intermediate sleeve (33) has on its one end side a shoulder (33) projecting radially over the outer face of the intermediate sleeve wherein the surface of the shoulder remote from the end side of the intermediate sleeve (33) adjoins the one end side of the fastening sleeve (32) and that a small part of the outer face (330) of the intermediate sleeve (33) is connected in force-locking and/or keyed engagement with a corresponding part of the inner face of the fastening sleeve (32).

6. Device according to one of claims 2 - 5 characterised in that the fastening sleeve (2) is connected to a cylinder stopper (8) through a plate (5) and a connecting element (6) which is preferably made from Plexiglass.

7. Device according to claim 1 characterised in that the components (10,11) of the motion picture camera (1) which are to be connected together are connected to extension elements wherein a heat expansion compensation pendulum (3) is mounted between the ends of these elements set at a free point in the motion picture camera (1).

8. Device according to one of the preceding claims for connecting a lens carrier with the camera body of a motion picture camera,
characterised in that two heat expansion compensation pendulums (3,3*) are arranged symmetrical to the centre longitudinal axis of the camera body (10) either side of the lens bore (12) in the lens carrier (11).

9. Device according to one of claims 2- 8 characterised in that the fastening pin (31) and the fastening sleeve (32) are made from PERNIFER (36) with a heat expansion coefficient of 1.2 X 10⁻⁶ mm/°C and the intermediate sleeve (33) consists of an aluminium-zinc-magnesium-copper-alloy with a heat expansion coefficient of 23 x 10⁻⁶ mm/°C.

## Revendications

1. Dispositif pour assembler deux pièces d'une caméra cinématographique, c'est-à-dire pour assembler un support d'objectif à un boîtier de caméra ou un guide de film à un dispositif d'entraînement de film, caractérisé en ce que le dispositif se présente sous forme d'un dispositif de compensation d'un pendule de Rost (3) qui est constitué d'un premier élément (31) assemblé à une pièce (11), d'un deuxième élément (32) assemblé à l'autre pièce (10) et d'au moins un élément intermédiaire (33) disposé entre le premier et le deuxième éléments (31, 32) et assemblé à ceux-ci, et en ce que le coefficient de dilatation thermique de l'élément intermédiaire (33) est égal à un multiple du coefficient de dilatation thermique des premier et deuxième éléments (31, 32).

2. Dispositif selon la revendication 1, caractérisé en ce que le premier élément est constitué d'une broche de fixation (31) assemblée par une liaison due à une force et/ou à la forme à une pièce (11), en ce que le deuxième élément est constitué d'une douille de fixation (32) assemblée par une liaison due à une force et/ou à la forme à la deuxième pièce (10) et en ce que l'élément intermédiaire est constitué d'une douille intermédiaire (33) assemblée radialement à la broche de fixation (31) et à la douille de fixation (32), tandis qu'il est prévu un jeu axial (41, 42) entre les faces frontales de la douille intermédiaire (33) et les pièces (10, 11) assemblées l'une à l'autre.

3. Dispositif selon la revendication 2, caractérisé en ce que la broche de fixation (31), la douille de fixation (32) et la douille intermédiaire (33) ont une forme cylindrique.

4. Dispositif selon la revendication 2 ou 3, caractérisé en ce qu'il existe un jeu radial (44) entre la face intérieure de la douille de fixation (32) et la face extérieure de la douille intermédiaire (33) sur une large zone des deux surfaces de contact.

5. Dispositif selon l'une des revendications 2 à 4, caractérisé en ce que la douille intermédiaire (33) présente, sur l'une de ses faces frontales, un épaulement (331) faisant saillie radialement par-dessus la surface extérieure de la douille intermédiaire et dont la surface opposée à la face frontale de la douille intermédiaire (33) prend appui sur une face frontale de la douille de fixation (32) et en ce qu'une faible partie de la face extérieure (330) de la douille intermédiaire (33) est assemblée par une liaison due à une force et/ou à la forme à une partie correspondante de la face intérieure de la douille de fixation (32).

6. Dispositiv selon l'une des revendications 2 à 5, caractérisé en ce que la douille de fixation (2) est assemblée à un bouchon cylindrique (8) par l'intermédiaire d'une plaque (5) et d'un élément d'assemblage (6) réalisé de préférence en plexiglas.

7. Dispositif selon la revendication 1, caractérisé en ce que les pièces (10, 11) de la caméra cinématographique (1), assemblées l'une à l'autre, sont assemblées à des éléments de prolongement entre les extrémités desquels, disposées, à un endroit libre dans la caméra cinématographique (11), est agencé un dispositif de compensation de la dilatation thermique (3).

8. Dispositif selon l'une des revendications précédentes, pour assembler un support d'objectif au boîtier d'une caméra cinématographique, caractérisé en ce que deux dispositifs de compensation de la dilatation thermique (3, 3*) sont disposés symétriquement par rapport à l'axe médian du boîtier de caméra (10), de part et d'autre du passage d'objectif (12) dans le support d'objectif (11).

9. Dispositif selon l'une des revendications 2 à 8, caractérisé en ce que la broche de fixation (31) et la douille de fixation (32) sont réalisées en PERNIFER (36) avec un coefficient de dilatation thermique de 1,2 x 10° mm/°C, tandis que la douille intermédiaire (33) est réalisée en un alliage aluminium-zinc-magnésium-cuivre ayant un coefficient de dilatation thermique de 23 x 10° mm/°C.
